(19) Europäisches Patentamt
European Patent Office
Office européen des brevets

(11) EP 4 239 746 A1

(12) EUROPEAN PATENT APPLICATION
published in accordance with Art. 153(4) EPC

(43) Date of publication:
**06.09.2023 Bulletin 2023/36**

(21) Application number: **22771760.0**

(22) Date of filing: **16.03.2022**

(51) International Patent Classification (IPC):
***H01M 10/0567*** *(2010.01)* ***H01M 10/0568*** *(2010.01)*
***H01M 4/525*** *(2010.01)* ***H01M 4/505*** *(2010.01)*
***H01M 10/052*** *(2010.01)*

(52) Cooperative Patent Classification (CPC):
**H01M 4/505; H01M 4/525; H01M 10/052; H01M 10/0567; H01M 10/0568; H01M 10/0569**

(86) International application number:
**PCT/KR2022/003680**

(87) International publication number:
**WO 2022/197094 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2021 KR 20210034084**

(71) Applicant: **LG Energy Solution, Ltd.**
**Seoul 07335 (KR)**

(72) Inventors:
- **LEE, Jung Min**
  **Daejeon 34122 (KR)**
- **LEE, Hyun Yeong**
  **Daejeon 34122 (KR)**
- **YEOM, Chul Eun**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

# (54) NON-AQUEOUS ELECTROLYTE FOR LITHIUM SECONDARY BATTERY AND LITHIUM SECONDARY BATTERY COMPRISING SAME

(57) The present invention relates to: a non-aqueous electrolyte for a lithium secondary battery, which comprises an additive comprising a compound represented by chemical formula 1, a lithium salt, and an organic solvent; and a lithium secondary battery comprising same.

EP 4 239 746 A1

## Description

## TECHNICAL FIELD

This application claims priority from Korean Patent Application No. 10-2021-0034084, filed on March 16, 2021, the disclosure of which are incorporated by reference herein.

The present invention relates to a non-aqueous electrolyte solution for a lithium secondary battery and a lithium secondary battery including the same.

## BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte solution that becomes a medium for transferring the lithium ions is injected thereinto and the battery case is then sealed.

Since the lithium secondary battery may be miniaturized and has high energy density and working voltage, it is being used in various fields such as mobile devices, electronic products, and electric vehicles. As the field of application of the lithium secondary battery is diversified, physical property conditions required are also gradually increasing, and, particularly, development of a lithium secondary battery, which may be stably operated even in high-temperature conditions, is required.

In a case in which the lithium secondary battery is operated under high-temperature conditions, $PF_6$- anions may be thermally decomposed from a lithium salt, such as $LiPF_6$, contained in the electrolyte solution to generate a Lewis acid such as $PF_5$, and this reacts with moisture to generate HF. Decomposition products, such as $PF_5$ and HF, may not only destroy a film formed on a surface of the electrode, but may also cause a decomposition reaction of an organic solvent. Also, the decomposition products may react with a decomposition product of the positive electrode active material to dissolve transition metal ions, and the dissolved transition metal ions may be electrodeposited on the negative electrode to destroy a film formed on a surface of the negative electrode.

Since performance of the battery is further degraded if the electrolyte decomposition reaction continues on the destroyed film as described above, there is a need to develop a secondary battery capable of maintaining excellent performance even under high-temperature conditions.

## DISCLOSURE OF THE INVENTION

## TECHNICAL PROBLEM

An aspect of the present invention provides a non-aqueous electrolyte solution that contributes to formation of a positive electrode film by including a sulfonyl pyridine-based additive and a lithium secondary battery including the same.

## TECHNICAL SOLUTION

According to an aspect of the present invention, there is provided a non-aqueous electrolyte solution for a lithium secondary battery which includes: a lithium salt; an organic solvent; and an additive including a compound represented by Formula 1.

[Formula 1]

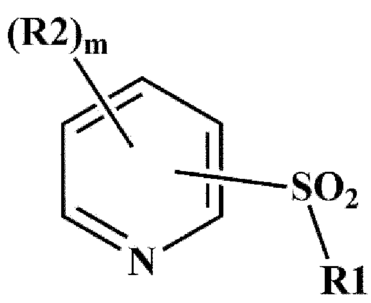

In Formula 1,

R1 is fluorine; or an alkyl group having 1 to 10 carbon atoms which is substituted with at least one fluorine,
R2 is an alkyl group having 1 to 10 carbon atoms, and
m is an integer of 0 to 4.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte solution for a lithium secondary battery.

## ADVANTAGEOUS EFFECTS

An aspect of the present invention may provide a non-aqueous electrolyte solution for a lithium secondary battery capable of suppressing a decomposition reaction of the electrolyte solution and reducing dissolution of a positive electrode by forming a robust film on a surface of the positive electrode.

Also, in the present invention, a lithium secondary battery, in which high-temperature storage characteristics and life characteristics of the battery are improved by including the non-aqueous electrolyte solution for a lithium secondary battery, may be provided.

## BEST MODE FOR CARRYING OUT THE INVENTION

Hereinafter, the present invention will be described in more detail.

In general, anions included in a lithium salt, such as $LiPF_6$, which is widely used in an electrolyte solution for a lithium secondary battery, form decomposition products, such as hydrogen fluoride (HF) and $PF_5$, due to thermal decomposition or moisture. These decomposition products have acidic properties and deteriorate a film or electrode surface in the battery.

Transition metals in a positive electrode are easily dissolved into the electrolyte solution due to the decomposition products of the electrolyte solution and structural variation of the positive electrode according to repeated charge and discharge, and the dissolved transition metals are re-deposited on the positive electrode to increase resistance of the positive electrode. In addition, in a case in which the dissolved transition metals move to a negative electrode through the electrolyte solution, the dissolved transition metals are electrodeposited on the negative electrode to be a cause of destruction of a solid electrolyte interphase (SEI) and an additional electrolyte decomposition reaction, and, as a result, problems, such as consumption of lithium ions and an increase in resistance, occur.

Also, a protective film is formed on the positive electrode and the negative electrode by an electrolyte solution reaction during initial activation of the battery, wherein, in a case in which the film becomes unstable for the above reason, additional decomposition of the electrolyte solution occurs during charge-discharge or high-temperature exposure to promote degradation of the battery and generate gas.

In order to solve this problem, the present inventors have used a sulfonyl pyridine-based compound represented by the following Formula 1 as an additive of a non-aqueous electrolyte solution, and have found that the decomposition reaction of the electrolyte solution may be reduced and the dissolution of the transition metals and the gas generation may be suppressed by the additive. Furthermore, the present inventors have confirmed that there is an effect of efficiently forming a protective film on the positive electrode at the positive/negative electrode by sulfur (S)-based and fluorine (F)-based components.

Specifically, with respect to the lithium secondary battery using the electrolyte solution containing $LiPF_6$ as described above, there is a problem in that the battery is degraded due to HF as the decomposition product of $LiPF_6$, wherein, since a pyridine group included in the compound represented by Formula 1 acts as a Lewis base, there is an effect of stabilizing $PF_5$ which is a Lewis acid and an intermediate derivative before the HF is generated. Particularly, since the pyridine group has a higher binding energy with $PF_5$ than other nitrogen (N)-containing structures such as an imidazole group, it is effective in reducing the generation of the HF.

Also, a $-SO_2$-R1 functional group included in the compound represented by Formula 1 is decomposed at the positive/negative electrode to constitute the film formed on the electrode, and this contributes to formation of a stable interface between the electrode and the electrolyte solution. In a case in which R1 containing fluorine is attached to the pyridine group rather than a sulfonyl group, a problem may occur in which a structure of the pyridine group is broken during oxidation/reduction decomposition due to the action of R1, but, in a case in which R1 is attached to the sulfonyl group as in the present invention, since it does not affect the structure of the pyridine group, a film may be formed more smoothly. In addition, the $-SO_2$-R1 functional group of Formula 1 of the present invention is advantageous in that it may further include fluorine, which is a functional group helpful for a film component, in comparison to $-SO_3$, and, since the - $SO_2$-R1 functional group includes F instead of O, a LiF component may be included in the film, and thus, it is more advantageous for the formation of a film with improved thermal stability and high voltage characteristics.

Hereinafter, each component constituting the present invention will be described in more detail.

## Non-aqueous Electrolyte Solution

### (1) Additive

The non-aqueous electrolyte solution of the present invention includes an additive including a compound represented by Formula 1 below.

[Formula 1]

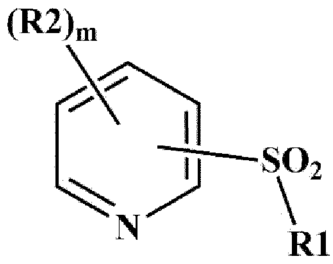

In Formula 1,

R1 is fluorine; or an alkyl group having 1 to 10 carbon atoms which is substituted with at least one fluorine,
R2 is an alkyl group having 1 to 10 carbon atoms, and
m is an integer of 0 to 4.

In an embodiment of the present invention, the compound represented by Formula 1 may be represented by Formula 1-1 below.

[Formula 1-1]

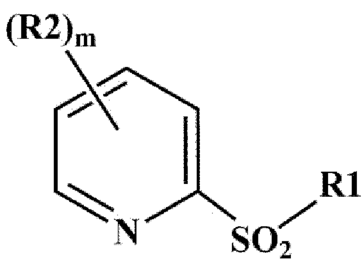

In Formula 1-1,
R1, R2, and m are as defined in Formula 1.

In an embodiment of the present invention, R1 may be an alkyl group having 1 to 5 carbon atoms which is substituted with at least one fluorine, particularly a methyl group substituted with at least one fluorine, and more particularly a difluoromethyl group. As the number of substituted fluorine increases, a larger amount of LiF may be generated to strengthen the film, but, in a case in which an excessively large amount of fluorine is substituted, resistance may be rather increased. That is, the difluoromethyl group is most preferable in consideration of the amount of the LiF formed on the surface of the positive/negative electrode.

In an embodiment of the present invention, R2 may be a linear or branched alkyl group having 1 to 5 carbon atoms.

In an embodiment of the present invention, m may be 0 or 1, for example, 0.

In an embodiment of the present invention, the compound represented by Formula 1 may be represented by Formula 1a below.

[Formula 1a]

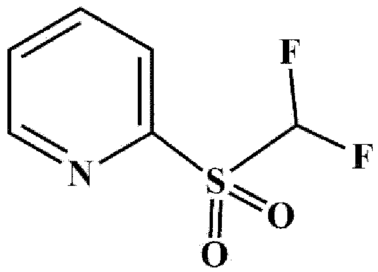

In an embodiment of the present invention, an amount of the compound represented by Formula 1 may be in a range of 0.1 wt% to 5 wt%, preferably 0.1 wt% to 3 wt%, and more preferably 0.5 wt% to 1 wt% based on a total weight of the non-aqueous electrolyte solution.

When the amount of the compound represented by Formula 1 is within the above range, an effect of improving performance by forming an appropriate level of positive/negative film may be obtained.

Specifically, in a case in which the amount of the compound represented by Formula 1 is less than 0.1 wt%, the amount is too small to form a sufficient film on the positive/negative electrode, and, in a case in which the amount of the compound represented by Formula 1 is greater than 5 wt%, since the amount of the compound represented by Formula 1 is excessively increased to cause an increase in resistance, battery performance may be rather degraded.

In order to prevent the electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution of the present invention may optionally include the following other additives, if necessary.

The other additives may be at least one selected from a cyclic carbonate-based compound, a halogen-substituted carbonate-based compound, a sultone-based compound, a sulfate-based compound, a phosphate-based or phosphite-based compound, a borate-based compound, a nitrile-based compound, an amine-based compound, a silane-based compound, a benzene-based compound, or a lithium salt-based compound.

The cyclic carbonate-based compound may be at least one selected from vinylene carbonate (VC) or vinylethylene carbonate (VEC), and may specifically be vinylene carbonate.

The halogen-substituted carbonate-based compound may be fluoroethylene carbonate (FEC).

The sultone-based compound is a material capable of forming a stable SEI by a reduction reaction on the surface of the negative electrode, wherein the sultone-based compound may be at least one compound selected from 1,3-propane sultone (PS), 1,4-butane sultone, ethane sultone, 1,3-propene sultone (PRS), 1,4-butene sultone, or 1-methyl-1,3-propene sultone, and may specifically be 1,3-propane sultone (PS).

The sulfate-based compound is a material which may be electrically decomposed on the surface of the negative electrode to form a stable SEI that does not crack even during high-temperature storage, wherein the sulfate-based compound may be at least one selected from ethylene sulfate (Esa), trimethylene sulfate (TMS), or methyl trimethylene sulfate (MTMS) .

The phosphate-based or phosphite-based compound may be at least one selected from lithium difluoro(bisoxalato)phosphate, lithium difluorophosphate, tris(trimethylsilyl)phosphate, tris(trimethylsilyl)phosphite, tris(2,2,2-trifluoroethyl)phosphate, or tris(trifluoroethyl)phosphite.

The borate-based compound may be lithium tetraphenylborate.

The nitrile-based compound may be at least one selected from succinonitrile (SN), adiponitrile (ADN), acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl)ether (ASA3), 1,3,6-hexanetricarbonitrile (HTCN), 1,4-dicyano 2-butene (DCB), or 1,2,3-tris(2-cyanoethyl)propane (TCEP).

The amine-based compound may be at least one selected from triethanolamine or ethylenediamine, and the silane-based compound may be tetravinylsilane.

The benzene-based compound may be at least one selected from monofluorobenzene, difluorobenzene, trifluorobenzene, or tetrafluorobenzene.

The lithium salt-based compound is a compound different from the lithium salt included in the electrolyte, wherein the lithium salt-based compound may be at least one compound selected from lithium difluorophosphate (LiDFP; $LiPO_2F_2$), lithium bis (oxalato) borate (LiBOB; $LiB(C_2O_4)_2$), lithium tetrafluoroborate ($LiBF_4$), or lithium difluorobis(oxalato)phosphate (LiDFOP).

Preferably, the additive of the non-aqueous electrolyte solution according to an embodiment of the present

invention may further include at least one selected from vinylene carbonate (VC), vinyl ethylene carbonate (VEC), fluoroethylene carbonate (FEC), 1,3-propane sultone (PS), 1,3-propene sultone (PRS), ethylene sulfate (ESa), succinonitrile (SN), adiponitrile (ADN), ethylene glycol bis (2-cyanoethyl)ether (ASA3), 1,3,6-hexanetricarbonitrile (HTCN), 1,4-dicyano 2-butene (DCB), 1,2,3-tris(2-cyanoethyl)propane (TCEP), lithium difluoro(oxalato)borate (LiODFB), lithium tetrafluoroborate ($LiBF_4$), lithium difluorobis(oxalato)phosphate (LiDFOP), or lithium difluorophosphate (LiDFP), as other additives.

More preferably, the additive of the non-aqueous electrolyte solution according to the embodiment of the present invention may further include at least one selected from vinylene carbonate (VC), 1,3-propane sultone (PS), ethylene sulfate (ESa), or lithium difluorophosphate (LiDFP), as other additives. In this case, since a polymeric film may be formed together in addition to a positive/negative electrode film component mainly formed by the compound represented by Formula 1, there is an effect of further improving high-temperature performance.

An amount of the other additives may be in a range of 0.1 wt% to 10 wt%, for example, 0.3 wt% to 5 wt% based on the total weight of the non-aqueous electrolyte solution. In a case in which the amount of the other additives is less than 0.1 wt%, since an effect of additional stable film formation is small, there is no improvement in terms of high-temperature capacity and gas generation, and, in a case in which the amount of the other additives is greater than 10 wt%, there is a possibility that a side reaction in the electrolyte solution occurs excessively during charge and discharge of the battery. Particularly, since the additives for forming an SEI may not be sufficiently decomposed at high temperatures when an excessive amount of the additives for forming an SEI is added, the additives may be present in the form of an unreacted material or precipitates in the electrolyte solution at room temperature. Accordingly, a side reaction may occur in which life or resistance characteristics of the battery are degraded.

### (2) Organic Solvent

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, and may preferably include a mixture of at least two selected from a cyclic carbonate-based solvent, a linear carbonate-based solvent, or a linear ester-based solvent.

The cyclic carbonate-based solvent may well dissociate a lithium salt in the electrolyte due to high permittivity as a highly viscous organic solvent, wherein the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, specifically, may include ethylene carbonate (EC) .

Also, the linear carbonate-based solvent is an organic solvent having low viscosity and low permittivity, wherein the linear carbonate-based solvent may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may specifically include ethyl methyl carbonate (EMC).

In order to prepare an electrolyte solution having high ionic conductivity, it is desirable that a mixture of the cyclic carbonate-based solvent and the linear carbonate-based solvent is used as the organic solvent.

The linear ester-based solvent may be at least one selected from methyl acetate, ethyl acetate, propyl acetate, methyl propionate, ethyl propionate, propyl propionate, or butyl propionate.

The cyclic ester-based solvent may be at least one selected from $\gamma$-butyrolactone, $\gamma$-valerolactone, $\gamma$-caprolactone, $\sigma$-valerolactone, or $\varepsilon$-caprolactone.

The nitrile-based solvent may be at least one selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile, and may preferably be succinonitrile.

A remainder excluding other components except for the organic solvent, for example, the amounts of the additive and the lithium salt, in the total weight of the non-aqueous electrolyte solution may all be the organic solvent unless otherwise stated.

### (3) Lithium Salt

The non-aqueous electrolyte solution of the present invention includes a lithium salt.

Any lithium salt typically used in an electrolyte solution for a lithium secondary battery may be used as the lithium salt without limitation, and, specifically, the lithium salt may include $Li^+$ as a cation, and may include at least one selected from F-, Cl-, Br-, I-, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$,

$AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF$-, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, or $SCN^-$ as an anion.

Specifically, the lithium salt may be at least one selected from $LiPF_6$, $LiClO_4$, $LiBF_4$, $LiN(FSO_2)_2$ (LiFSI), LiTFSI, lithium bis(pentafluoroethanesulfonyl)imide (LiBETI), $LiSO_3CF_3$, $LiPO_2F_2$, lithium bis(oxalate)borate (LiBOB), lithium difluoro(oxalate)borate (LiFOB), lithium difluoro (bisoxalato)phosphate (LiDFOP), lithium tetrafluoro(oxalate)phosphate (LiTFOP), or lithium fluoromalonato(difluoro)borate (LiFMDFB), and may preferably be at least one selected from $LiPF_6$ or $LiN(FSO_2)_2$ (LiFSI).

In an embodiment of the present invention, a concentration of the lithium salt in the electrolyte may be in a range of 0.5 M to 4.0 M, particularly 0.5 M to 3.0 M, and more particularly 0.8 M to 2.0 M. When the concentration of the lithium salt is within the above range, adequate electrolyte impregnability may be obtained by preventing excessive increases in viscosity and surface tension while sufficiently securing an effect of improving low-temperature output and improving cycle characteristics.

## Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and a non-aqueous electrolyte solution. In this case, the non-aqueous electrolyte solution is the above-described non-aqueous electrolyte solution according to the present invention. Since the non-aqueous electrolyte solution has been described above, a description thereof will be omitted and other components will be described below.

### (1) Positive Electrode

The positive electrode according to the present invention includes a positive electrode active material, and may be prepared by coating a positive electrode collector with a positive electrode slurry including the positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from LCO ($LiCoO_2$); LNO ($LiNiO_2$); LMO ($LiMnO_2$) ; $LiMn_2O_4$; $LiCoPO_4$; LFP ($LiFePO_4$) ; or a lithium composite transition metal oxide containing nickel (Ni), cobalt (Co), or manganese (Mn).

In an embodiment of the present invention, the lithium composite transition metal oxide may be at least one selected from $LiNiCoMnO_2$; $LiNi_{1-x-y-z}Co_xM^1_yM^2_zO_2$ ($M^1$ and $M^2$ are each independently any one selected from the group consisting of aluminum (Al), nickel (Ni), cobalt (Co), iron (Fe), manganese (Mn), vanadium (V), chromium (Cr), titanium (Ti), tungsten (W), tantalum (Ta), magnesium (Mg), and molybdenum (Mo), and x, y, and z are each independently atomic fractions of oxide composition elements, wherein $0 \le x < 0.5$, $0 \le y < 0.5$, $0 \le z < 0.5$, and $x+y+z=1$); or a compound represented by Formula 2 below.

Specifically, the positive electrode active material may include a lithium composite transition metal oxide represented by Formula 2 below.

[Formula 2] $$Li_{1+x}(Ni_aCo_bMn_cM_d)O_2$$

In Formula 2,

M is tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), or molybdenum (Mo), and
1+x, a, b, c, and d are atomic fractions of each independent element,
wherein $-0.2 \le x \le 0.2$, $0.50 \le a < 1$, $0 < b \le 0.30$, $0 < c \le 0.30$, $0 \le d \le 0.10$, and $a+b+c+d=1$.

1+x represents a molar ratio of lithium, wherein x may satisfy $-0.1 \le x0 \le 0.2$ or $0 \le x \le 0.2$. When the molar ratio of

the lithium satisfies the above range, a crystal structure of the lithium composite transition metal oxide may be stably formed.

a represents a molar ratio of nickel among total metals excluding lithium, wherein a may satisfy $0.60 \le a < 1$, $0.70 \le a < 1$, or $0.80 \le a < 1$. When the molar ratio of the nickel satisfies the above range, since high energy density may be exhibited, high capacity may be achieved.

b represents a molar ratio of cobalt among the total metals excluding lithium, wherein b may satisfy $0 < b \le 0.25$, $0 < b \le 0.20$, or $0 < b \le 0.15$. When the molar ratio of the cobalt satisfies the above range, good resistance characteristics and output characteristics may be achieved.

c represents a molar ratio of manganese among the total metals excluding lithium, wherein c may satisfy $0 < c \le 0.25$, $0 < c \le 0.20$, or $0 < c \le 0.15$. When the molar ratio of the manganese satisfies the above range, structural stability of the positive electrode active material is excellent.

d represents a molar ratio of a doping element among the total metals excluding lithium, wherein d may satisfy $0 < d \le 0.08$, $0 < d \le 0.05$, or $0 < d \le 0.03$.

More specifically, the lithium composite transition metal oxide may be at least one selected from $Li(Ni_{0.6}Mn_{0.2}Co_{0.2})O_2$, $Li(Ni_{0.7}Mn_{0.15}Co_{0.15})O_2$, or $Li(Ni_{0.8}Mn_{0.1}Co_{0.1})O_2$.

The positive electrode active material may be included in an amount of 80 wt% to 99 wt%, for example, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

Also, the conductive agent is a material providing conductivity without causing adverse chemical changes in the battery, wherein it may be added in an amount of 0.5 wt% to 20 wt% based on the total weight of the solid content in the positive electrode slurry.

Examples of the conductive agent may be a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 40 wt% to 90 wt%, for example, 50 wt% to 80 wt%.

### (2) Negative Electrode

The negative electrode according to the present invention includes a negative electrode active material, and may be prepared by coating a negative electrode collector with a negative electrode slurry including the negative electrode active material, a binder, a conductive agent, and a solvent, and then drying and rolling the coated negative electrode collector.

The negative electrode collector generally has a thickness of 3 μm to 500 um. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; or an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may include at least one selected from a carbon material capable of reversibly intercalating/deintercalating lithium ions; metal or an alloy of lithium and the metal; a metal composite oxide; a material which may be doped and undoped with lithium; lithium metal; or a transition metal oxide.

As the carbon material capable of reversibly intercalating/deintercalating lithium ions, a carbon-based negative electrode active material generally used in a lithium ion secondary battery may be used without particular limitation, and,

as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, $PbO_2$, $Pb_2O_3$, $Pb_3O_4$, $Sb_2O_3$, $Sb_2O_4$, $Sb_2O_3$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (Me: Mn, Fe, Pb, or Ge; Me': Al, B, phosphorus (P), Si, Groups I, II and III elements of the periodic table, or halogen; $0 < x \leq 1$; $1 \leq y \leq 3$; $1 \leq z \leq 8$) may be used as the metal composite oxide.

The material, which may be doped and undoped with lithium, may include Si, $SiO_x$ ($0 < x \leq 2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), sulfur (S), selenium (Se), tellurium (Te), polonium (Po), and a combination thereof.

Examples of the transition metal oxide may be lithium-containing titanium composite oxide (LTO), vanadium oxide, and lithium vanadium oxide.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of a solid content in the slurry including the negative electrode active material, the binder, and the conductive agent is in a range of 30 wt% to 80 wt%, for example, 40 wt% to 70 wt%.

### (3) Separator

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution and excellent safety as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may

be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as a hybrid electric vehicle (HEV) .

Thus, according to another embodiment of the present invention, a battery module including the lithium secondary battery as a unit cell and a battery pack including the battery module are provided.

The battery module or the battery pack may be used as a power source of at least one medium or large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

## MODE FOR CARRYING OUT THE INVENTION

### Example 1.

(Preparation of Non-aqueous Electrolyte Solution)

After ethylene carbonate (EC) and ethyl methyl carbonate (EMC) were mixed in a volume ratio of 30:70, a non-aqueous organic solution was prepared by dissolving $LiPF_6$ such that a concentration of the $LiPF_6$ was 1.0 M. 100 wt% of a non-aqueous electrolyte solution was prepared by mixing 0.5 wt% of the compound represented by Formula 1a, 0.5 wt% of vinylene carbonate (VC), and the non-aqueous organic solution as a remainder.

(Preparation of Lithium Secondary Battery)

$Li(Ni_{0.8}Co_{0.1}Mn_{0.1})O_2$ as a positive electrode active material, a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 60 wt%). A 15 μm thick aluminum (Al) thin film, as a positive electrode collector, was coated with the positive electrode slurry, dried, and then roll-pressed to prepare a positive electrode.

A negative electrode active material (graphite:SiO=94.5:5.5 weight ratio), a binder (SBR-CMC), and a conductive agent (carbon black) were added in a weight ratio of 95:3.5:1.5 to water, as a solvent, to prepare a negative electrode slurry (solid content: 60 wt%) . A 6 um thick copper (Cu) thin film, as a negative electrode collector, was coated with the negative electrode slurry, dried, and then roll-pressed to prepare a negative electrode.

An electrode assembly was prepared by sequentially stacking the positive electrode, a polyolefin-based porous separator coated with inorganic particles ($Al_2O_3$), and the negative electrode.

The electrode assembly prepared was accommodated in a pouch-type battery case, and the above-prepared non-aqueous electrolyte solution was injected thereinto to prepare a lithium secondary battery.

### Example 2.

A lithium secondary battery was prepared in the same manner as in Example 1 except that 1 wt% of the compound represented by Formula 1a was added during the preparation of the non-aqueous electrolyte solution.

### Example 3.

A lithium secondary battery was prepared in the same manner as in Example 1 except that 2 wt% of the compound represented by Formula 1a was added during the preparation of the non-aqueous electrolyte solution.

### Comparative Example 1.

A lithium secondary battery was prepared in the same manner as in Example 1 except that the compound

represented by Formula 1a was not added during the preparation of the non-aqueous electrolyte solution.

**Comparative Example 2.**

A lithium secondary battery was prepared in the same manner as in Example 1 except that pyridine was added instead of the compound represented by Formula 1a during the preparation of the non-aqueous electrolyte solution.

**Comparative Example 3.**

A lithium secondary battery was prepared in the same manner as in Example 1 except that 2-fluoro pyridine having a structure, in which fluorine was directly substituted for pyridine, was added instead of the compound represented by Formula 1a during the preparation of the non-aqueous electrolyte solution.

**<Experimental Example 1: High-temperature Lifetime Evaluation>**

After each of the lithium secondary batteries prepared in the examples and the comparative examples was activated at a CC of 0.1 C, degassing was performed.

Subsequently, each lithium secondary battery was charged at a CC of 0.33 C to 4.20 V under a constant current-constant voltage (CC-CV) charge condition at 25°C, then subjected to 0.05 C current cut-off, and discharged at 0.33 C to 2.5 V under a CC condition. After the above charging and discharging were defined as one cycle and three cycles were performed, initial discharge capacity was measured using PNE-0506 charge/discharge equipment (manufacturer: PNE SOLUTION Co., Ltd., 5 V, 6 A).

Then, each lithium secondary battery was charged at a CC of 0.33 C to 4.20 V under a constant current-constant voltage (CC-CV) charge condition at 45°C, then subjected to 0.05 C current cut-off, and discharged at 0.33 C to 2.50 V under a CC condition. After the above charging and discharging were defined as one cycle and 200 cycles of charge and discharge were performed, discharge capacity after 200 cycles at 45°C was measured using PNE-0506 charge/discharge equipment (manufacturer: PNE SOLUTION Co., Ltd., 5 V, 6 A).

A discharge capacity retention after 200 cycles at a high temperature (45°C) was calculated using the following Equation (1), and the results thereof are presented in Table 1 below.

Equation (1): Discharge capacity retention after 200 cycles (%) = (discharge capacity after 200 cycles/initial discharge capacity) × 100

[Table 1]

| | Initial capacity (mAh) | Capacity after 200 cycles at 45°C (mAh) | Capacity retention (%) |
|---|---|---|---|
| Example 1 | 2,236.8 | 2,002.9 | 89.5 % |
| Example 2 | 2,231.5 | 1,968.3 | 88.2 % |
| Example 3 | 2,129.7 | 1,850.4 | 86.9 % |
| Comparative Example 1 | 2,237.2 | 1,865.1 | 83.4 % |
| Comparative Example 2 | 2,130.6 | 1,808.9 | 84.9 % |
| Comparative Example 3 | 2,131.4 | 1,821.1 | 85.4 % |

From the results of Table 1, with respect to Examples 1 to 3 using the compound represented by Formula 1a according to the present invention as an additive, it may be confirmed that capacity retentions were higher than those of Comparative Examples 1 to 3.

These characteristics are due to the fact that the sulfonyl pyridine-based additive represented by Formula 1a, which was used in the examples, stabilized $PF_5$ in a high-temperature environment to reduce the generation of HF, and simultaneously formed a stable film on the electrode to improve thermal stability and high voltage characteristics.

With respect to Examples 1 to 3, the capacity retentions were significantly improved in comparison to Comparative Example 2 using the additive not containing a sulfonyl group and fluorine as well as Comparative Example 1 not including the pyridine-based additive, wherein, through this, with respect to Examples 1 to 3, it may be understood that life characteristics of the battery were significantly improved due to the positive/negative electrode film formation by the sulfonyl group and fluorine included in Formula 1a as well as the $PF_5$ stabilization effect by a pyridine structure.

Also, with respect to Examples 1 to 3, it may be confirmed that the capacity retentions were improved even in comparison to Comparative Example 3 using the additive in which fluorine was directly substituted for pyridine without the sulfonyl group, and the reason for this is that, with respect to Comparative Example 3, the film-forming effect due to the sulfonyl group was not only disappeared, but smooth film formation was also difficult while the pyridine ring structure during oxidation/reduction decomposition was affected by the action of the fluorine as described above. Accordingly, it may be confirmed that there was an effect of improving high-temperature lifetime due to the film formation when Formula 1a contained both the sulfonyl group and the fluorine.

That is, it may be understood that, in a case in which the non-aqueous electrolyte solution including the compound represented by Formula 1a according to the present invention is used, a lithium ion battery having excellent high-temperature life characteristics may be provided.

**<Experimental Example 2: High-temperature Storage Evaluation>**

After each of the lithium secondary batteries prepared in the examples and the comparative examples was activated at a CC of 0.1 C, degassing was performed.

Subsequently, each lithium secondary battery was charged at a CC of 0.33 C to 4.20 V under a constant current-constant voltage (CC-CV) charge condition at 25°C, then subjected to 0.05 C current cut-off, and discharged at 0.33 C to 2.5 V under a CC condition. After the above charging and discharging were defined as one cycle and three cycles were performed, each lithium secondary battery was charged at a CC of 0.33 C to 4.20 V under a constant current-constant voltage (CC-CV) charge condition at 25°C and then subjected to 0.05 C current cut-off. Thereafter, an initial thickness of the battery was measured using a plate thickness gauge with a weight of 300 g. Specifically, a thickness was measured in such a manner that the battery was put on the plate thickness gauge and a weight of 300 g was placed on the battery to check a displayed value.

The secondary battery after the measurement of the initial thickness was left standing in an oven (OF-02GW, manufactured by JEIO TECH, CO., LTD.) at 60°C for 4 weeks, and, after the secondary battery was taken out from the oven after 4 weeks and cooled at room temperature for 1 hour, a thickness after high-temperature storage was measured using a plate thickness gauge with a weight of 300 g in the same manner as the initial stage.

A thickness increase rate of the battery after high-temperature storage was calculated using the following Equation (2), and the results thereof are presented in Table 2 below.

Equation (2): Thickness increase rate after 4 weeks of storage at 60°C (%) = (battery thickness after 4 weeks of storage at 60°C-initial battery thickness)/initial battery thickness × 100

[Table 2]

| | Initial thickness (mm) | Thickness after storage at 60°C (mm) | Thickness increase rate (%) |
|---|---|---|---|
| Example 1 | 3.227 | 3.589 | 11.2 |
| Example 2 | 3.218 | 3.532 | 9.8 |
| Example 3 | 3.221 | 3.525 | 9.4 |
| Comparative Example 1 | 3.236 | 3.857 | 19.2 |
| Comparative Example 2 | 3.230 | 3.812 | 18.2 |
| Comparative Example 3 | 3.228 | 3.726 | 15.4 |

From the results of Table 2, with respect to Examples 1 to 3 using the compound represented by Formula 1a

according to the present invention as an additive, it may be confirmed that thickness increase rates after high-temperature storage were reduced in comparison to those of Comparative Examples 1 to 3.

These characteristics are due to the fact that the sulfonyl pyridine-based additive represented by Formula 1a, which were used in the examples, stabilized $PF_5$ in a high-temperature environment to reduce the generation of HF, and simultaneously formed a stable film on the electrode to improve thermal stability and reduce gas generation due to a side reaction in the film.

With respect to Examples 1 to 3, the thickness increase rates after high-temperature storage were significantly reduced in comparison to Comparative Example 2 using the additive not containing a sulfonyl group and fluorine as well as Comparative Example 1 not including the pyridine-based additive, wherein, through this, with respect to Examples 1 to 3, it may be understood that a side reaction at an electrode interface was suppressed due to the positive/negative electrode film formation by the sulfonyl group and fluorine included in Formula 1a as well as the $PF_5$ stabilization effect by the pyridine structure.

Also, from the results of Comparative Example 3 using the additive in which fluorine was directly substituted for pyridine without the sulfonyl group, with respect to a case where only the fluorine was substituted, since the effect of forming a film on the electrode was reduced in comparison to a case where both the sulfonyl group and the fluorine were substituted, it may be understood that an amount of gas generated was increased. That is, it may be confirmed that there was an effect of reducing the amount of the generated gas by the film formation when Formula 1a contained both the sulfonyl group and the fluorine.

That is, it may be understood that, in a case in which the non-aqueous electrolyte solution including the compound represented by Formula 1a according to the present invention is used, a lithium ion battery having excellent characteristics of suppressing the gas generation due to high-temperature storage may be provided.

## Claims

1. A non-aqueous electrolyte solution for a lithium secondary battery, comprising a lithium salt; an organic solvent; and an additive including a compound represented by Formula 1:

[Formula 1]

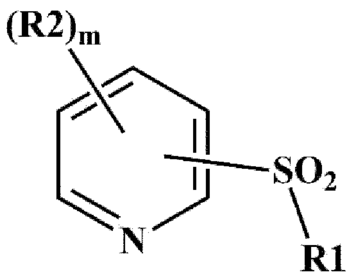

wherein, in Formula 1,

R1 is fluorine; or an alkyl group having 1 to 10 carbon atoms and being substituted with at least one fluorine,
R2 is an alkyl group having 1 to 10 carbon atoms, and
m is an integer of 0 to 4.

2. The non-aqueous electrolyte solution for a lithium secondary battery of claim 1, wherein the compound represented by Formula 1 is represented by Formula 1-1:

[Formula 1-1]

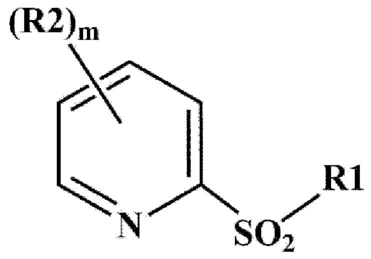

wherein, in Formula 1-1,
R1, R2, and m are as defined in Formula 1.

3. The non-aqueous electrolyte solution for a lithium secondary battery of claim 1, wherein R1 is an alkyl group having 1 to 5 carbon atoms and is substituted with at least one fluorine.

4. The non-aqueous electrolyte solution for a lithium secondary battery of claim 1, wherein R1 is a methyl group substituted with at least one fluorine.

5. The non-aqueous electrolyte solution for a lithium secondary battery of claim 1, wherein m is 0.

6. The non-aqueous electrolyte solution for a lithium secondary battery of claim 1, wherein an amount of the compound represented by Formula 1 is in a range of 0.1 wt% to 5 wt% based on a total weight of the non-aqueous electrolyte solution.

7. The non-aqueous electrolyte solution for a lithium secondary battery of claim 1, wherein an amount of the compound represented by Formula 1 is in a range of 0.1 wt% to 3 wt% based on a total weight of the non-aqueous electrolyte solution.

8. The non-aqueous electrolyte solution for a lithium secondary battery of claim 1, wherein the additive further comprises at least one selected from vinylene carbonate, 1,3-propane sultone, ethylene sulfate, or lithium difluorophosphate.

9. The non-aqueous electrolyte solution for a lithium secondary battery of claim 1, wherein the lithium salt comprises at least one selected from $LiPF_6$ or $LiN(FSO_2)_2$.

10. The non-aqueous electrolyte solution for a lithium secondary battery of claim 1, wherein the organic solvent comprises a mixture of at least two selected from a cyclic carbonate-based solvent, a linear carbonate-based solvent, or a linear ester-based solvent.

11. A lithium secondary battery, comprising:

a positive electrode including a positive electrode active material;
a negative electrode including a negative electrode active material;
a separator disposed between the positive electrode and the negative electrode; and
the non-aqueous electrolyte solution of claim 1.

12. The lithium secondary battery of claim 11, wherein the positive electrode active material comprises a lithium composite transition metal oxide represented by Formula 2:

[Formula 2] $Li_{1+x}(Ni_aCo_bMn_cM_d)O_2$

wherein, in Formula 2,

M is W, Cu, Fe, V, Cr, Ti, Zr, Zn, Al, In, Ta, Y, La, Sr, Ga, Sc, Gd, Sm, Ca, Ce, Nb, Mg, B, or Mo, and
1+x, a, b, c, and d are atomic fractions of each independent element,
wherein $-0.2<x<0.2$, $0.50\leq a<1$, $0<b\leq 0.30$, $0<c\leq 0.30$, $0\leq d\leq 0.10$, and $a+b+c+d=1$.

13. The lithium secondary battery of claim 12, wherein a satisfies $0.60\leq a<1$.

## INTERNATIONAL SEARCH REPORT

International application No. **PCT/KR2022/003680**

**A. CLASSIFICATION OF SUBJECT MATTER**

**H01M 10/0567**(2010.01)i; **H01M 10/0568**(2010.01)i; **H01M 4/525**(2010.01)i; **H01M 4/505**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 비수 전해액(non-aqueous electrolyte solution), 리튬염(lithium salt), 첨가제(additive), 피리딘(pridine), 설포닐기(sulfonyl group), 불소로 치환된 알킬기(fluorine-substituted alkyl group)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-134168 A (SUMITOMO SEIKA CHEM CO., LTD.) 10 May 2002 (2002-05-10)<br>See claim 1; paragraphs [0016]-[0018] and [0023]; and examples 1 and 5. | 1-13 |
| Y | CN 107195970 A (SOUTH CHINA NORMAL UNIVERSITY) 22 September 2017 (2017-09-22)<br>See claim 1; and paragraphs [0004], [0009] and [0025]. | 1-13 |
| Y | KR 10-1639858 B1 (LG CHEM, LTD.) 14 July 2016 (2016-07-14)<br>See claim 1; and paragraphs [0016], [0018] and [0023]. | 8 |
| A | KR 10-2016-0097075 A (LG CHEM, LTD.) 17 August 2016 (2016-08-17)<br>See entire document. | 1-13 |
| A | CN 111029654 A (SHANSHAN NEW MATERIAL (QUZHOU) CO., LTD.) 17 April 2020 (2020-04-17)<br>See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2022** | **16 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/003680**

| Patent document cited in search report | Publication date (day/month/year) | Patent family member(s) | Publication date (day/month/year) |
|---|---|---|---|
| JP 2002-134168 A | 10 May 2002 | None | |
| CN 107195970 A | 22 September 2017 | None | |
| KR 10-1639858 B1 | 14 July 2016 | CN 104781976 A | 15 July 2015 |
| | | CN 104781976 B | 07 July 2020 |
| | | EP 2797156 A1 | 29 October 2014 |
| | | EP 2797156 B1 | 21 June 2017 |
| | | JP 2015-522209 A | 03 August 2015 |
| | | JP 6067851 B2 | 25 January 2017 |
| | | KR 10-2014-0104383 A | 28 August 2014 |
| | | TW 201505231 A | 01 February 2015 |
| | | TW I636603 B | 21 September 2018 |
| | | US 2014-0272604 A1 | 18 September 2014 |
| | | US 9608290 B2 | 28 March 2017 |
| | | WO 2014-129823 A1 | 28 August 2014 |
| KR 10-2016-0097075 A | 17 August 2016 | KR 10-1800930 B1 | 23 November 2017 |
| CN 111029654 A | 17 April 2020 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210034084